Europäisches Patentamt

European Patent Office

Office européen des brevets

(11) Publication number: **0 356 159 B1**

## EUROPEAN PATENT SPECIFICATION

(45) Date of publication of patent specification: **13.10.93** (51) Int. Cl.⁵: **B60C 9/08**, B60C 9/00

(21) Application number: **89308384.0**

(22) Date of filing: **17.08.89**

(54) **Pneumatic tires.**

(30) Priority: **23.08.88 JP 207371/88**
**23.08.88 JP 207372/88**

(43) Date of publication of application:
**28.02.90 Bulletin 90/09**

(45) Publication of the grant of the patent:
**13.10.93 Bulletin 93/41**

(84) Designated Contracting States:
**DE ES FR GB IT LU**

(56) References cited:
**FR-A- 1 313 763**
**LU-A- 68 105**
**US-A- 2 317 911**
**US-A- 4 056 652**
**US-A- 4 713 114**

(73) Proprietor: **Bridgestone Corporation**
**1-1, Kyobashi 1-Chome**
**Chuo-Ku**
**Tokyo 104(JP)**

(72) Inventor: **Ohshima, Kazuo**
**356-19, Narahashi 2-chome**
**Higashiyamato City Tokyo(JP)**
Inventor: **Wada, Ichiro**
**5-5-207, Ogawahigashi-cho 3-chome**
**Kodaira City Tokyo(JP)**
Inventor: **Araki, Shunji**
**5-5-630, Ogawahigashi-cho 3-chome**
**Kodaira City Tokyo(JP)**

(74) Representative: **Whalley, Kevin et al**
**MARKS & CLERK**
**57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to pneumatic tires, and more particularly to a pneumatic radial tire attaining reduction of tire noise, reduction of rolling resistance and reduction of tire weight.

In the conventional tubeless radial tires, an innerliner rubber layer has been attached to an inner surface of the tire for preventing air leakage. That is, the presence of the innerliner rubber layer has been considered to be inevitable for the prevention of the air leakage. However, the weight of the innerliner rubber layer is 400 g/tire in case of a passenger car tire having a tire size of 165 SR 13, which is a serious obstacle in view of the reduction of tire weight.

In general, the air leakage is considered due to the fact that high pressure air inside the tire permeates through the innerliner rubber layer and leaks through cords of the carcass ply toward the outside of the tire to reduce the internal pressure.

For this end, there have been adopted various countermeasures such as thickening of the innerliner rubber layer, use of bromobutyl rubber, chlorobutyl rubber or the like as a rubber for the innerliner having a less air permeability, lessening of air permeability in cords and so on.

On the other hand, US-A-3,963,678 and US-A-3,984,600 disclose the use of polyester monofilament as a material for cords of carcass ply in the tire. As a result of the inventors' study, however, it has been confirmed that the air permeability is considerably improved by using the polyester monofilament cords but the fatigue resistance is degraded so that these cords can not be put into practical use as a carcass ply cord.

As a means for preventing the reduction of internal pressure, there is considered a method of using butyl series rubber such as chlorobutyl rubber, bromobutyl rubber or the like as a rubber for the innerliner rubber layer having a very small air permeability, a method wherein air is hardly passed through the inside of the cord by increasing a cord stretching ratio at a temperature near to the melting point of the cord in a step of applying and drying an adhesive to the cord or a so-called dipping treatment step for suppressing air permeation through the cord to deform cord filaments into a closest packing form, and the like. However, all of these methods can not completely prevent the reduction of the internal pressure in the tire. Particularly, even when the chlorobutyl rubber being effective against air permeation is used in the innerliner and the gauge of the innerliner at a crown center portion is about 0.5 mm and further the carcass ply cords are subjected to the above heat treatment under tension for hardly conducting the air permeation, the reduction of internal pressure to about 10% can not be avoided for about 2 months.

Even if it is intended to prevent air permeation by using the innerliner, it is difficult to completely cover the inner surface of the tire with the innerliner over a whole periphery of the inner surface of the tire, particularly up to the bead portion. For this end, it is finally necessary and indispensable to completely prevent the permeation of air through the inside of the cord.

Recently, it is socially demanded to reduce the tire noise. In this connection, the inventors have made various studies on the mechanism of generating tire noise and confirmed that the noise generated during the running of the tire mainly results from slight vibrations of sidewall portion in the tire.

In general, the tire is repeatedly subjected to large deformation at the sidewall portion of the tire during the running of the tire. That is, the sidewall portion of the tire bulges outward at a ground contacting state, and turns back to original state as it comes off from the ground contacting state. In fact, the sidewall portion of the tire exhibits a very complicated behavior and is repeatedly subjected to three-dimensionally complicated deformation. Such a multi-dimensional movement of the sidewall portion vibrates air in the vicinity of the sidewall portion to generate noise. In order to prevent the occurrence of noise, therefore, it is sufficient to suppress the deformation of the sidewall portion. In this case, however, the vibration absorbability undesirably lowers, and the ride comfortability against vibrations is extremely degraded.

The inventors have made further studies for solving the aforementioned problems and preventing the occurrence of air leakage in the radial tire and reducing the tire noise and found that when monofilament cords are applied to the carcass ply of the radial tire, the air permeation through the cord is completely prevented (100%) and further the reductions of tire noise and tire weight can be achieved. Moreover, the inventors have clarified that when cords of polyester monofilament as disclosed in US-A-3,963,678 and US-A-3,984,600 or polyester monofilament having an ellipsoidal shape in section as disclosed in US-A-4,634,625 are used in the carcass ply, the vibration of the sidewall portion is suppressed but the fatigue resistance and adhesion property to rubber are considerably degraded and hence these cords can not be put into practical use. In order to overcome the weakpoints of the above polyester monofilament, it can easily be anticipated to use polyamide monofilaments, but the use of such a polyamide monofilament is still poor in the fatigue resistance. In general, it is considered that when the monofilament is used as a reinforcing cord, compression strain and tensile strain are applied to the cord and hence the so-called fatigue resistance largely lowers.

In this connection, the inventors have made further studies and found that the fatigue resistance can largely be improved to a level enough to be actually used in the tire when the sectional shape of the polyamide monofilament is ellipsoidal.

According to the invention, therefore, there is the provision of a pneumatic radial tire comprising the features of claim 1.

The invention will be described with reference to the accompanying drawing, wherein:

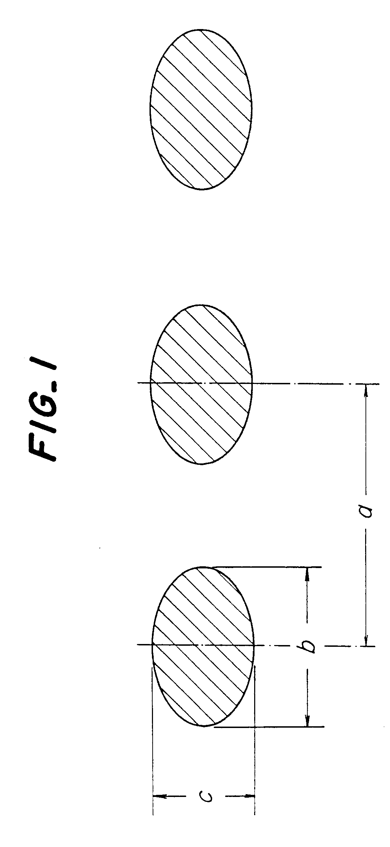

Fig. 1 is a schematically sectional view of a monofilament cord for carcass ply.

In the polyamide monofilament cord according to the invention, it is preferable that a ratio of major axis b to minor axis c in the ellipsoid of the cord as shown in Fig. 1 is 1.5<b/c<5. When b/c is not more than 1.5, the shape approaches to true circle, which is unfavorable in view of the fatigue resistance and adhesion property. While, when b/c is not less than 5, the fatigue resistance and adhesion property are improved, but the end count is critical even when the number of monofilament cords embedded is increased and hence the carcass strength becomes lacking and it is obliged to undesirably increase the number of carcass plies used. Preferably, the ratio b/c is $2 \leq b/c \leq 4$ in view of the design of fatigue resistance and strength.

When such polyamide monofilament cords having an ellipsoidal shape in section are applied to the carcass ply of the radial tire, the reductions of tire noise, rolling resistance and tire weight aiming at the invention are first possible.

In general, when an innerliner having a gauge of about 0.5 mm at a crown center of the tire is attached to the inner surface of the tire, the reduction of tire weight is not expected. Now, the inventors have examined the possibility of largely reducing the gauge of the innerliner rubber by utilizing the monofilament cord capable of largely improving the air permeability. However, even if the gauge of the innerliner rubber is merely made thin, the air permeability of rubber itself is poor, or cracks are generated in the innerliner rubber through strain. In this connection, the inventors have confirmed that when not less than 30 parts by weight of mica or not less than 5 parts by weight of polyethylene resin is added to the innerliner rubber comprising 40-100 parts by weight of butyl or chlorobutyl rubber and 0-60 parts by weight of diene rubber, even if the gauge of the innerliner rubber is thin, the air permeation can be prevented and further the fatigue resistance such as crack resistance or the like can be improved. Such a thinning of the gauge of the innerliner rubber is also effective for reducing the tire weight in case of using usual tire cords, but since the usual tire cord is apt to naturally pass air as previously mentioned, even if the gauge of the innerliner rubber is made thin by improving the composition of this rubber, it is difficult to ensure the prevention on the reduction of internal pressure in the conventional tire. On the contrary, the effect of the invention can be first developed by combining the use of polyamide monofilament cord having an ellipsoidal shape in section with the thinning of the innerliner rubber gauge.

In such a combination of the monofilament and the innerliner rubber, the tires aiming at the invention can be first obtained by rendering the gauge of the innerliner rubber into not more than 0.4 mm. For example, when the innerliner rubber gauge is reduced from 0.5 mm (usually used in the conventional tire) to 0.15 mm, it is possible to reduce the total tire weight up to not less than 5% (350 g) in case of a radial tire having a tire size of 165 SR 13, and further the reduction of internal pressure in the tire can considerably be prevented as compared with that of the conventional tire.

According to the invention, the rolling resistance as well as the reduction of tire noise can be largely improved. In this case, when the innerliner rubber is merely thinned, the rolling resistance is improved to about 2% as compared with the conventional tire, but when the thinning of the innerliner rubber is combined with the use of the monofilament cord, it is possible to improve the rolling resistance to about 10%. On the other hand, when the monofilament cords are merely used in the carcass ply, the rolling resistance is not necessarily improved. The improvement of the rolling resistance is closely related to the end count of the monofilaments. That is, as the end count (cord occupying ratio) becomes small, the rolling resistance is improved. In this connection, the inventors have found that the effect of improving the rolling resistance is obtained when the ratio b/a as shown in Fig. 1 is not more than 45%. As a result of the inventors' study, when the cord occupying ratio b/a is about 30%, the rolling resistance is improved to about 10% as compared with the conventional tire. The smaller the cord occupying ratio, the better the effect, but when the cord occupying ratio is not more than 20%, the end count is lacking and the tire safety largely lowers. In general, the tire safety is represented by product of cord tenacity and end count and is preferable to have a value higher than a certain value. On the contrary, when using the monofilament cord according to the invention, the numerical value defined by the product of cord tenacity and end count as mentioned above can be more lowered and hence the amount of cords used can largely be reduced.

Because, when using such monofilament cords, it is considered to enhance the rigidity of the sidewall portion of the tire. For example, when a plunger is pushed to the sidewall portion of the tire, a plunger energy in the carcass ply containing the monofilament cords is enhanced to about 20% as compared with that of the conventional twisted cord under the same strength (cord tenacity x end count). That is, since the rigidity of the sidewall portion is enhanced, when the plunger is pushed onto the sidewall portion, the depression portion is enlarged and hence the stress is uniformly and widely dispersed. Therefore, in the tire using the monofilament cord, the cord tenacity or the end count can be reduced to about 20% as compared with the conventional tire safety, whereby the rolling resistance can largely be reduced.

Furthermore, such an enhancement of the rigidity in the sidewall portion is recognized to have a remarkable effect on the reduction of tire noise. The tire noise is based on vibrations of slight area of the sidewall portion but is not dependent upon the deformation strain of the whole of the sidewall portion, so that the reduction of tire noise can be attained without damaging ride comfortability against vibrations and the like by enhancing the rigidity of the sidewall portion. That is, since the monofilament cord is high in the bending rigidity, when the monofilament cord is applied to the carcass ply of the tire, it prevents the slight deformation of the sidewall portion, and consequently the deformation of the sidewall film generating the tire noise can be prevented to largely reduce the tire noise.

The inventors have further confirmed that the polyamide monofilament cords having an ellipsoidal shape in section as mentioned above can be used as a cord in a carcass of bias structure in pneumatic bias tires. In general, the bias tire comprises a tread portion, a pair of side portions extending from both ends of the tread portion, a pair of bead portions each located at an inward end of the side portion, and a reinforcement comprised of a carcass of bias structure extending between the bead portions and comprised of plural rubberized plies each containing cords arranged at an angle of 30° to 45° with respect to the circumferential direction of the tire, the cords of which plies being crossed with each other, and a breaker superimposed about a crown of the carcass and inside the tread and composed of at least one layer containing organic fiber cords or steel cords. As the cord for the carcass ply in the bias tire, there are usually used so-called twist cords obtained by bundling several hundreds filaments each having a fine denier of 2-10 denier/filament together and then subjecting them to cable twisting and ply twisting. Further, monofilament cords as described in US-A-3,963,678, US-A-3,984,600 and US-A-4,634,625 have recently been considered to be applied to the carcass ply for the bias carcass. However, it has been confirmed that when using the conventional monofilament cords as a carcass ply, if such a carcass ply is laminated one upon the other to form a bias carcass, air is apt to be stored between the carcass plies and hence it is necessary to discharge away the stored air during the vulcanization. For this purpose, it is required to pierce the tire with a prick over a whole circumference thereof before the vulcanization, but the monofilament cords may be damaged by the pricking. The similar problems are caused when the carcass ply is composed of only the polyamide monofilament cords according to the invention.

The inventors have made studies with respect to the problem of air storing when using the polyamide monofilament cords, and found that the air storing can be largely improved when not less than 2/3 of total cords for the bias carcass is comprised of the polyamide monofilament cords having an ellipsoidal shape in section. In this case, it is necessary that the remaining cords in the carcass are twist cords made from the multifilaments and have an air permeation of not less than 4 kg•cm$^2$/hour, preferably 8 kg•cm$^2$/hour. When the occupying ratio of the monofilament cord is less than 2/3 of total cords in the bias carcass, the effect of improving the tire rigidity or plunger energy based on the monofilament cord becomes undesirably small.

When all cords of the carcass ply in the bias tire are made from the monofilament cords, partial separation through air is frequently caused in the outermost carcass ply in the bias carcass. Therefore, it is preferable that the multifilament twist cords having an air permeation of not less than 4 kg•cm$^2$/hour are applied to the outermost carcass ply, while the remaining carcass ply is comprised of the polyamide monofilament cords defined in the invention. Thus, the air squeezing effect can be considerably improved in the green tire for bias tires before the vulcanization.

According to the invention, when the polyamide monofilament cords are applied to the bias tire, it is favorable that the multifilament twist cords each having an air permeation of not less than 4 kg•cm$^2$/hour and a twisting coefficient $N_T$ of not less than 0.37 but not more than 0.57 represented by an equation of $N_T = N \times \sqrt{0.139 \times D / \rho} \times 10^{-3}$ (N is a twisting number of cord (turns/10 Cm), D is a half of total denier of cord and $\rho$ is a specific gravity of cord) are used in an outermost carcass ply among carcass plies of the bias carcass and the remaining carcass plies are made from the polyamide monofilament cords each having an ellipsoidal shape in section as previously defined. In the multifilament twist cord, the reason why the twisting coefficient $N_T$ is limited to a range of 0.37-0.57 is due to the fact that when $N_T$ is outside the above range, the strength and fatigue resistance as a tire cord undesirably lower. In the ellipsoidal polyamide monofilament cord, the minor axis is preferable to be not less than 0.15 mm or not less than 1000 denier, preferably about 2000-5000 deniers.

The following examples are given in illustration of the invention and are not intended as limitations thereof.

The radial tires used in the following Examples and Comparative Examples were subjected to various tests as mentioned below.

## (1) End count

The test tire was cut at its crown center portion in the circumferential direction of the tire, and then the cut surface was buffed to measure an end count of the cords in the 1 inch length of the carcass ply. The unit was cords/inch.

## (2) Cord occupying ratio

The size of the cord (major axis $b$ and minor axis $c$ in case of ellipsoidal cord) was measured from the cut surface of the tire obtained in the above item (1). Furthermore, the cord occupying ratio was calculated according to the following equation (see Fig. 1):

$$\text{cord occupying ratio (\%)} = 100 \times \frac{\text{end count (cords/inch)} \times b \text{ (mm)}}{2.54 \text{ mm}}$$

## (3) Innerliner gauge

The innerliner gauge was measured from the cut surface of the tire obtained in the above item (1).

## (4) Index for reduction ratio of internal pressure

The test tire was inflated under an internal pressure of 1.9 atmospheric pressure and left to stand in a room of $25\pm1°C$ for 24 hours. Thereafter, the internal pressure was again adjusted to 1.9 atmospheric pressure and the tire was left to stand in the room of $25\pm1°C$ for 60 days. Then, the internal pressure of the tire was measured. In the conventional tire (control tire), the internal pressure was reduced by about 0.2 atmospheric pressure after 2 months. The index for reduction ratio of internal pressure in the test tire was represented by the following equation on the basis that the control tire was 100:

$$\text{Index for reduction ratio of internal pressure} = \frac{0.2 \text{ (atmosphereic presusre)}}{\substack{\text{reduction of internal pressure} \\ \text{of test tire after 60 days} \\ \text{(atmospheric pressure)}}} \times 100$$

## (5) Index of rolling resistance

The test tire subjected to an internal pressure of 1.70 kg/cm$^2$ was placed on a drum of 1708 mm in outer diameter and trained at 80 km/hr under a JIS 100% load for 30 minutes. After the internal pressure was readjusted, the rotation speed of the drum was raised to 200 km/hr and then the driving of the drum was stopped. Then, the rolling resistance was calculated according to the following equation from inertia moment until the rotation speed of the drum lowered from 185 km/hr to 20 km/hr:

$$\text{Rolling resistance of tire} = \frac{ds}{dt}\left(\frac{ID}{RD^2} + \frac{It}{Rt^2}\right) - \text{resistance of drum itself}$$

ID: inertia moment of drum
It: inertia moment of tire

5

RD:     radius of drum

Rt:     radius of tire

The value of the rolling resistance at 50 km/hr was measured according to the above equation. Moreover, the measurement was carried out in a room controlled to 24±2°C. The index of the rolling resistance was represented by the following equation:

$$\text{Index of test tire} = 100+100 \times \left( \frac{\begin{array}{l}\text{value of rolling resistance}\\\text{of control tire} - \text{value of}\\\text{rolling resistance of test tire}\end{array}}{\begin{array}{l}\text{value of rolling resistance}\\\text{of control tire}\end{array}} \right)$$

The smaller the value of rolling resistance, the larger the index value and the better the fuel consumption.

(6) Noise

The test tire subjected to an internal pressure of 1.7 kg/cm$^2$ was trained at a speed of 60-80 km/hr under a load for full riding capacity over a distance of 20 km. After the internal pressure was again adjusted to 1.7 kg/cm$^2$, noise level was measured at a speed of a test vehicle of 40, 60, 80 or 100 km/hr by means of a microphone located at a position apart from a center line of the vehicle. In this case, the inertia running of the vehicle was started from a position of 50 m on this side of the microphone and continued at a position of 50 m after the microphone. Moreover, two microphones were arranged at a position of 1.2 m apart from ground in an interval of 50 cm and in a direction perpendicular to the running direction of the vehicle and parallel with the ground surface. After the speed was confirmed to be within an acceptable range (testing speed ± 2 km/hr) from a passing time over a distance of 10 m around the position of the microphone, the noise level was recorded.

Moreover, the dark noise is desirable to be not more than 10 dB (A) of the passing noise. The measurement was repeated two times per one speed. When the difference of the measured values is more than 2.5 dB (A), the measurement was further repeated two times, and an average value of the four measured values was adopted as a noise level. Moreover, the measured value was an average value of noise level read from the microphone and the noise level reproduced from a tape, wherein a recording style was according to JASO 7319.

(7) Cord strength

The carcass ply cord was cut out from the tire at a length of about 35 cm around the center of the crown portion of the tire, and the strength at break was measured at a fastening distance of 25 cm and room temperature according to a tensile test of JIS L1071, which was divided by total denier before twisting to obtain a strength S (g/d). Moreover, the denier before the twisting was used as a total denier, which was to avoid the complicated treatment because the cord was somewhat stretched at the cord treating step and the vulcanization step for tire.

The test tire had a size of 165 SR 13 and was manufactured by properly varying an end count of polyester (PET, 1500 d/2) twist cords having a twisting structure of 40 x 40 T/10 cm or monofilament cords consisting essentially of nylon-6,6 (4000 d) in the radial carcass ply. Furthermore, the belt was comprised of two steel cord layers each containing steel cords with a diameter of 0.23 mm and a 1x5 structure. Moreover, the above nylon monofilament cords were coated with an adhesive dipping solution (RFL adhesive) having the following composition and then subjected to a tensile heat treatment under conditions as shown in the following Table 1.

| RFL adhesive | |
|---|---|
| | (part by weight) |
| water | 67.016 |
| resolcin | 1.306 |
| formalin (37%) | 1.900 |
| caustic soda | 0.036 |
| VP latex (41%) | 5.800 |
| SBR latex (40%) | 23.942 |

Table 1

| | dry zone | hot zone | normalize zone |
|---|---|---|---|
| tension (g/d) | 0.3 | 0.3 | 0.3 |
| temperature (°C) | 130 | 215 | 210 |
| exposure time (sec) | 72 | 36 | 36 |

In the tensile heat treatment of the monofilament cord, it is important that the stretching at the tensile heat treating step of the cord is held at the contracting side. That is, it is preferable to perform the treatment at a minus stretching (0 to -3%) because the cord strength lowers as the tension becomes large. On the other hand, the polyester twist cords were treated under usual conditions of treating temperature, tension and exposure time of 140°C, 1 g/d and 120 seconds at dry zone, 245°C, 1 g/d and 45 seconds at hot zone, and 250°C, 0.5 g/d and 45 seconds at normalize zone.

The above twist cords or monofilament cords were woven into a tire fabric by the usual method, which was subjected to the dipping treatment under the above conditions and rubberized to form a rubberized carcass ply for use in the usual tire. The properties of green cord and dipped cord are shown in the following Table 2.

Table 2

| Kind of cord | | Nylon-6,6 monofilament cord | Conventional PET cord |
|---|---|---|---|
| Green cord | denier (d) | 4000 | 1500d/2(40X40T/10cm) |
| | strength (g/d) | 9.0 | 7.3 |
| | tenacity (kg) | 36.2 | 22 |
| | elongation at break (%) | 18.9 | 14 |
| | major axis (mm) | 1.2 | 0.63 |
| | minor axis (mm) | 0.4 | 0.63 |
| Dipped cord | strength (g/d) | 36.9 | 21.5 |
| | elongation at break (%) | 20.6 | 19 |

Test tires were manufactured under the same tire building and vulcanization conditions as in the existing tires. The results of these test tires measured on the above tests are shown in the following Table 3.

Table 3(a)

| | Comparative Example 1 | Comparative Example 2 | Comparative Example 3 | Comparative Example 4 | Comparative Example 5 | Example 1 | Example 2 |
|---|---|---|---|---|---|---|---|
| Material | PET | PET | PET | PET | PET | nylon | nylon |
| Denier | 1500d/2 | 1500d/2 | 1500d/2 | 1500d/2 | 1500d/2 | 4000d/1 | 4000d/1 |
| Twisting number (T/10 cm) | 40×40 | 40×40 | 40×40 | 40×40 | 40×40 | mono-filament | mono-filament |
| End count (cords/inch) | 14.0 | 14.0 | 14.0 | 14.0 | 14.0 | 7.0 | 7.0 |
| Cord occupying ratio b/a (%) | 35 | 35 | 35 | 35 | 35 | 34 | 34 |
| Innerliner rubber material | - | - | mica 50 parts | mica 50 parts | PE resin * 10 parts | mica 50 parts | mica 50 parts |
| Innerliner rubber gauge (mm) | 0.5 | 0.15 | 0.15 | 0.15 | 0.15 | 0.15 | 0.15 |
| Index for reduction of internal pressure | 100 | 60 | 90 | 90 | 90 | 130 | 130 |
| Reduction of tire weight (g/tire) | ±0 | -350 | -350 | -350 | -350 | -330 | -330 |
| Index of rolling resistance | 100 | 102 | 102 | 102 | 102 | 110 | 110 |
| Noise level (dB(A)) | 67.8 (0) | 67.8 (0) | 67.8 (0) | 67.8 (0) | 67.8 (0) | 66.6 (-1.2) | 66.6 (-1.2) |

EP 0 356 159 B1

## Table 3(b)

| | Example 3 | Example 4 | Comparative Example 6 | Example 5 | Comparative Example 7 | Comparative Example 8 |
|---|---|---|---|---|---|---|
| Material | nylon | nylon | nylon | nylon | nylon | nylon |
| Denier | 4000d/1 | 4000d/1 | 4000d/1 | 4000d/1 | 4000d/1 | 4000d/1 |
| Twisting number (T/10 cm) | mono-filament | mono-filament | mono-filament | mono-filament | mono-filament | mono-filament |
| End count (cords/inch) | 7.0 | 7.0 | 7.0 | 8.1 | 9.0 | 12.0 |
| Cord occupying ratio b/a (%) | 34 | 34 | 34 | 39 | 47 | 62 |
| Innerliner rubber material | PE resin * 10 parts | mica 50 parts | mica 50 parts | mica 50 parts | mica 50 parts | mica 50 parts |
| Innerliner rubber gauge (mm) | 0.15 | 0.25 | 0.5 | 0.15 | 0.15 | 0.15 |
| Index for reduction of internal pressure | 130 | 200 | 300 | 130 | 130 | 130 |
| Reduction of tire weight (g/tire) | -330 | -250 | 0 | -320 | -320 | -320 |
| Index of rolling resistance | 109 | 108 | 108 | 105 | 100 | 97 |
| Noise level (dB(A)) | 66.6 (-1.2) | 66.6 (-1.2) | 66.6 (-1.2) | 66.8 (-1.0) | 67.3 (-0.5) | 67.8 (0) |

* ... polyethylene resin

The following facts were confirmed from the data of Table 3.

9

## Comparative Example 1

A single carcass ply containing the usual twist cords of PET (1500 d/2) was used in the tire. In this case, the end count at the crown center portion was 14 cords/inch, which was the same as in the commercially available existing tire. The tire had an innerliner rubber gauge of 0.5 mm and a weight of 6.5 kg, which was a control tire.

## Comparative Example 2

The tire was the same as in Comparative Example 1 except that the innerliner rubber gauge was 0.15 mm. The tire weight was reduced by 350 g, but the air permeation was considerably deteriorated because the innerliner rubber gauge was thinned.

## Comparative Examples 3-5

In Comparative Examples 3-5, an innerliner rubber having a composition capable of preventing the air permeation was used as the innerliner rubber. As a result, the air permeation was improved as compared with the case of Comparative Example 2. However, the reduction of internal pressure was larger than that of the control tire.

## Example 1

The tire was the same as in Comparative Example 3 except that the nylon monofilament cords having an ellipsoidal shape in section were used as a radial carcass ply and had an end count of 7 cords/inch. As a result, the reduction of internal pressure could be prevented, and also the rolling resistance and noise level reduction were largely improved.

## Examples 2 and 3

The tires were the same as in Example 1 except that the material of the innerliner rubber was changed. In this case, the effect was equal to that of Example 1.

## Example 4

The tire was the same as in Example 1 except that the innerliner rubber gauge was 0.25 mm. In this case, the tire weight was somewhat increased as compared with that of Example 1, but the index of the rolling resistance was somewhat lowered and largely improved as compared with that of the control tire.

## Comparative Example 6

The tire was the same as in Example 4 except that the innerliner rubber gauge was further thickened as compared with that of Example 4. In this case, the tire weight was equal to that of the control tire.

## Example 5

The tire was the same as in Example 1 except that the end count was somewhat increased. As a result, the rolling resistance was somewhat degraded, but the rolling resistance, noise level reduction and air permeation were largely improved as compared with those of the control tire.

## Comparative Example 7 and 8

The tires were the same as in Example 1 except that the end count was further increased. As a result, the rolling resistance was equal to or poorer than that of the control tire.

As mentioned above, according to the invention, the reductions of noise, rolling resistance and weight in the pneumatic radial tire can be achieved by using the polyamide monofilament cords having an ellipsoidal shape in section.

There will be further described the following examples using the ellipsoidal polyamide monofilament cords according to the invention for carcass plies in bias tires.

The test tire had a tire size of LTS7.00-15 8 PR, wherein the control tire contained usual nylon-6,6 multifilament twist cords having a twisting structure of 1260 d/2 and a twisting number of 39x39 T/10 cm as a carcass ply cord for the bias carcass. The other test tires were manufactured by varying the material of the cord, the treating conditions and the like per 30 tires. These test tires were subjected to tests on partial separation through air and tire performances. Moreover, the pricking before the vulcanization was carried out at bead portion and shoulder portion in all tires, wherein the penetration depth of the prick was made shallow so as not to give damage to the carcass ply cords. In Comparative Examples 9 and 10, usual nylon or polyester twist cords were used as a carcass ply cord and the end count at the crown center portion was 21.2 cords/inch. In Comparative Examples 11-14 and Examples 6-8, the monofilament cords were used in each of first to third carcass plies and the multifilament twist cords having an air permeation varied by changing various treating conditions were used in a fourth carcass ply. In Example 9 and Comparative Examples 15 and 16, a mixture of monofilament cords and multifilament twist cords was used as a carcass ply cord.

Moreover, in Comparative Examples 9-14 and Examples 6-8, the cords were usually woven into a tire cord fabric, which was then immersed in a dipping solution, subjected to a tensile heat treatment and covered with a rubber sheet to obtain a rubberized carcass ply. In Example 9 and Comparative Examples 15 and 16, each of the multifilament twist cords or monofilament cords was immersed in the dipping solution and subjected to the tensile heat treatment, which was separately wound around a drum and rubberized to form a rubberized carcass ply.

The air permeation of the multifilament twist cord was determined by properly selecting the heat treating conditions (which were usually called as 3T conditions, i.e. temperature, time and tension) at the heat treating step of the cord (dry zone, hot zone and normalize zone). The treating conditions of the multifilament cord used in Comparative Examples and Examples are shown in the following Table 4.

Table 4

| Air permeation (kg•cm$^2$/hr) | | 2 | 3 | 4 | 5 | 8 |
|---|---|---|---|---|---|---|
| Dry zone | temperature (°C) | 130 | 130 | 130 | 130 | 130 |
| | tension (g/cord) | 4000 | 3400 | - | - | - |
| | exposure time (sec.) | 120 | 120 | 120 | 120 | 120 |
| Hot zone | temperature (°C) | 240 | 240 | 230 | 230 | 230 |
| | tension (g/cord) | 4000 | 3400 | 4000 | 3600 | 3000 |
| | exposure time (sec.) | 40 | 40 | 40 | 40 | 40 |
| Normalize zone | temperature (°C) | 235 | 235 | 225 | 225 | 225 |
| | tension (g/cord) | 2000 | 1700 | 2000 | 1800 | 1500 |
| | exposure time (sec.) | 40 | 40 | 40 | 40 | 40 |

Before the heat treatment, the multifilament cords were immersed in the dipping solution having the same RFL adhesive as previously mentioned.

On the other hand, the heat treating conditions of the monofilament cord were 130°C x 120 seconds x 1.3 kg/cord at the dry zone, 215°C x 36 seconds x 1.3 kg/cord at the hot zone and 210°C x 36 seconds x 1.3 kg/cord at the normalize zone, and the dipping solution therefor was the same as mentioned above.

Moreover, the monofilament cord used in the invention was a nylon-6,6 monofilament cord of 4000 denier having an ellipsoidal shape in section, wherein the major axis was 1.1 mm and the minor axis was 0.4 mm.

For the reference, the properties of such a monofilament cord are shown in the following Table 5.

Table 5

| Green cord | denier | 4000d |
|---|---|---|
| | tenacity | 36 kg |
| | elongation at 10.1 kg | 7.3% |
| | elongation at break | 18.9% |
| | major axis | 1.1 mm |
| | minor axis | 0.4 mm |
| Dipped cord | tenacity | 36.6 kg |
| | elongation at 10.1 kg | 7.9% |
| | elongation at break | 13.0% |
| | heat shrinkage (%) (177°C x 30 min) | 4.6% |

The following tests were made with respect to the thus obtained test tires.

(a) Occurrence of partial separation through air

After the vulcanization, the full circumference of the tire was observed by a holography to confirm whether or not air storing was existent in the inside of the tire, whereby a tire having any air storing number was specified as an air stored tire. Thus, the number of the air stored tires was measured among 30 test tires every the treating condition. Moreover, test tires containing no air were used for subsequent drum test and performance tests.

(b) Air permeation of multifilament twist cord

A test sample of the rubberized carcass ply containing the multifilament twist cords therein (thickness: about 1 mm) was set in an apparatus for the measurement of air permeation under an initial pressure of 5.4 $kg/cm^2$, and then the reduction of pressure ($kg/cm^2/hr$) was measured. The pressure measurement was carried out every 5 minutes, but in case of the sample having a large pressure reduction, the measurement was carried out every 2 minutes for 10-30 minutes. Moreover, the measuring temperature was room temperature of 25±2°C. The measured values were averaged and converted into an amount of pressure reduction per 1 hour, which was an air permeation.

The test sample was prepared by embedding the multifilament twist cords in rubber at an end count of 50 cords/5 cm and then vulcanizing them at 153°C under a pressure of 20 $kg/cm^2$ for 20 minutes.

(c) Test for the measurement of low fuel consumption

The test tire subjected to an internal pressure of 5.75 $kg/cm^2$ was placed on a drum of 1708 mm in outer diameter and trained at 80 km/hr under a load of 1180 kg for 30 minutes. After the internal pressure was readjusted under no load and the above load was applied, the rotation speed of the drum was raised to 150 km/hr and then the driving of the drum was stopped. Then, the rolling resistance was calculated according to the following equation from inertia moment until the rotation speed of the drum lowered from 150 km/hr to 20 km/hr:

$$\text{Rolling resistance of tire} = \frac{ds}{dt}\left(\frac{ID}{RD^2} + \frac{It}{Rt^2}\right) - \text{resistance of drum itself}$$

ID:     inertia moment of drum
It:     inertia moment of tire
RD:     radius of drum
Rt:     radius of tire

By using the value of the rolling resistance at 50 km/hr measured according to the above equation as a typical value, the index for low fuel consumption was calculated according to the following equation:

Index for low fuel consumption = 100+100 ×

$$\left( \frac{\text{typical value of rolling resistance of control tire}}{\text{typical value of rolling resistance of control tire}} \right)$$

The larger the index value for low fuel consumption, the smaller the rolling resistance.

(d) Steering stability, ride comfortability against vibration

After the test tire was mounted onto a light truck, a feeling test on the steering stability and ride comfortability against vibration was conducted by a professional driver. These properties were relatively evaluated by 10 point process when the control tire was 5.

0: no change
+2: slightly good
-2: slightly poor
+4: good
-4: poor

(e) Drum life A (high speed running performance)

The test tire subjected to an internal pressure of 5.75 kg/cm$^2$ was placed on a drum of 1708 mm in outer diameter under a load of 1040 kg and then run while stepwise raising a driving speed under a condition as shown in the following Table 6. In this case, the test tire was left to stand in a room of 38±3°C for 24 hours and readjusted to a given internal pressure just before the placement on the drum.

Table 6

| Step | Speed (km/hr) | Time | Remarks |
|---|---|---|---|
| 1 | 80 | 1 hour | training |
| 2 | 100 | 1 hour | |
| 3 | 110 | 1 hour | |
| 4 | 125 | 6 hours | long running |
| 5 | 135 | 2 hours | extension part |
| 6 | 145 | 2 hours | |
| 7 | 155 | 2 hours | |
| 8 | 165 | 2 hours | |
| 9 | 175 | 2 hours | |
| 10 | 185 | 2 hours | |
| 11 | 195 | 2 hours | |
| 12 | 205 | 2 hours | |
| 13 | 215 | 2 hours | |
| 14 | 225 | 2 hours | |
| 15 | 235 | 2 hours | |
| 16 | 245 | continued until troubles | |

(f) Drum life B (loading resistance)

The test tire subjected to an internal pressure of 4.2 kg/cm$^2$ was run on the same drum as in the above item (e) as a speed of 81 km/hr while stepwise raising a load every a given time as shown in the following Table 7, during which a step till the occurrence of tire breakage was measured.

Table 7

| Step | load (kg) x time (hr) |
|------|----------------------|
| 1 | 795 x 7 |
| 2 | 1025 x 16 |
| 3 | 1205 x 24 |
| 4 | 1310 x 8 |
| 5 | 1415 x 8 |
| 6 | 1520 x 8 |
| 7 | 1630 x 8 |
| 8 | 1735 x 8 |
| 9 | 1845 x 8 |
| 10 | 1950 x 8 |
| 11 | 2060 x 8 |

(g) Measurement of plunger energy

The test tire was mounted onto a rim of 5.5J-15 under an internal pressure of 5.75 kgf/cm$^2$ and fixed to a testing machine under no load. Then, a plunger pin having a semispherical face ($\phi$ 19 mm) at the tip was vertically pushed down at a position of the tire crown center. Thus, the plunger energy (PE) was calculated according to the following equation based on plunger moving distance till the breakage of the tire Y (cm) and plunger pushing force at the breakage of the tire F (kg):

PE = 1/2•Y•F (kg•cm)

The plunger energy was represented by an index on the basis that the control tire was 100.

EP 0 356 159 B1

The test results are shown in the following Table 8.

## Table 8(a)

| | | Comparative Example 9 | Comparative Example 10 | Example 6 | Example 7 | Example 8 |
|---|---|---|---|---|---|---|
| Carcass ply | | nylon-6,6 multifilament | nylon-6,6 monofilament | nylon-6,6 multifilament / nylon-6,6 monofilament | nylon-6,6 multifilament / nylon-6,6 monofilament | nylon-6,6 multifilament / nylon-6,6 monofilament |
| Multifilament | cord structure | 1260 d/2 | 1260 d/2 | 1260 d/2 | 1260 d/2 | 1260 d/2 |
| | twisting number (T/10 cm) | 39×39 | 39×39 | 39×39 | 39×39 | 39×39 |
| Monofilament | cord structure | – | 4000 d/1 | 4000 d/1 | 4000 d/1 | 4000 d/1 |
| | twisting number (T/10 cm) | – | 0 | 0 | 0 | 0 |
| Multifilament air permeation (kg·cm²/hr) | | 4 | – | 8 | 8 | 5 |
| Structure of carcass ply | | All plies: mulfifilament | All plies: monofilament | Only outermost ply (4P) is multifilament | Only outermost ply (4P) is multifilament | Only outermost ply (4P) is multifilament |
| Occurrence of air storing (tires/30 tires) | | 0/30 | 19/30 | 0/30 | 0/30 | 0/30 |
| Index of plunger energy | | 100 | 101 | 120 | 103 | 103 |
| Index of total strength of carcass ply | | 100 | 80 | 100 | 85 | 85 |
| Index of rolling resistance | | 100 | 105 | 101 | 105 | 105 |
| Steering stability | | 5 | +3.0 | +2.5 | +2.5 | +2.5 |
| Ride comfortability against vibration | | 5 | ±0 | +1 | ±0 | ±0 |
| Drum life A (step number) | | 8 | 9 | 8 | 9 | 9 |
| Drum life B (step number) | | 10 | 11 | 10 | 11 | 11 |
| Judgement of drum life | | control | OK | OK | OK | OK |
| Percentage of monofilament (%) monofilament weight/total carcass ply weight | | 0 | 100 | 75 | 75 | 75 |

Table 8(b)

| Carcass ply | | | Comparative Example 11 | Comparative Example 12 | Example 9 | Comparative Example 13 | Comparative Example 14 |
|---|---|---|---|---|---|---|---|
| Multifilament | cord structure | | nylon-6,6 multifilament 1260 d/2 | nylon-6,6 multifilament 1260 d/2 | nylon-6,6 multifilament 1260 d/2 | nylon-6,6 multifilament 1260 d/2 | nylon-6,6 multifilament 1260 d/2 |
| | twisting number (T/10 cm) | | 39×39 | 39×39 | 39×39 | 39×39 | 39×39 |
| Monofilament | cord structure | | nylon-6,6 monofilament 4000 d/1 | nylon-6,6 monofilament 4000 d/1 | nylon-6,6 monofilament 4000 d/1 | nylon-6,6 monofilament 4000 d/1 | nylon-6,6 monofilament 4000 d/1 |
| | twisting number (T/10 cm) | | 0 | 0 | 0 | 0 | 0 |
| Multifilament air permeation (kg·cm²/hr) | | | 3 | 2 | 5 | 5 | 3 |
| Structure of carcass ply | | | Only outermost ply(4P) is multifilament | Only outermost ply(4P) is multifilament | equally distributed in all plies | equally distributed in all plies | equally distributed in all plies |
| Occurrence of air storing (tires/30 tires) | | | 3/30 | 6/30 | 0/30 | 0/30 | 3/30 |
| Index of plunger energy | | | 104 | 103 | 101 | 95 | 90 |
| Index of total strength of carcass ply | | | 85 | 85 | 85 | 85 | 85 |
| Index of rolling resistance | | | 105 | 105 | 103 | 101 | 101 |
| Steering stability | | | +2.5 | +2.5 | +2.0 | +1.0 | +1.0 |
| Ride comfortability against vibration | | | ±0 | ±0 | ±0 | ±0 | ±0 |
| Drum life A (step number) | | | 9 | 9 | 9 | 8 | 8 |
| Drum life B (step number) | | | 11 | 11 | 10 | 8 | 7 |
| Judgement of drum life | | | OK | OK | OK | × | × |
| Percentage of monofilament (%) monofilament weight/total carcass ply weight | | | 75 | 75 | 75 | 60 | 40 |

Comparative Example 9

A commercially available bias tire was a control tire. In this case, the bias carcass was comprised of first to third rubberized carcass plies each having an end count of 56.6 cords/5 cm and a fourth rubberized

16

EP 0 356 159 B1

carcass ply having an end count of 51 cords/5 cm. In the 30 tires, no air storing was found, so that they were subjected to the drum test for various tire performances.

Comparative Example 10

In this tire, the bias carcass was comprised of 4 rubberized carcass plies each containing nylon monofilament cords, wherein the first to third plies had an end count of 27 cords/5 cm and the fourth ply had an end count of 24.4 cords/5 cm. The cord strength was substantially reduced by about 80% as compared with the control tire, but the plunger energy was maintained at the same level as in the control tire. However, 19 tires among the 30 tires caused the air storing because the air permeation was poor owing to the use of the monofilament cord. On the other hand, the steering stability, rolling resistance, drum life and the like were improved as compared with those of the control tire.

Example 6

In this tire, the bias carcass was comprised of first to third rubberized carcass plies each containing the monofilament cords and fourth rubberized carcass ply containing multifilament twist cords of 1260 d/2 and 39 x 39T/10 cm. Moreover, the end count of each of the first to third plies was 33.8 cords/5 cm and the end count of the fourth ply was 51 cords/5 cm. The carcass strength was equal to that of the control tire, but the plunger energy was increased by 20% as compared with that of the control tire.

Furthermore, the rolling resistance, steering stability and drum life were considerably improved as compared with those of the control tire, and also the air storing was not observed.

Examples 7 and 8

In these tires, the bias carcass was comprised of first to third rubberized carcass plies each containing the monofilament cords and fourth rubberized carcass ply containing multifilament twist cords of 1260 d/2 and 39 x 39T/10 cm.

The end count of each of the first to third plies was 27 cords/5 cm and the end count of the fourth ply was 51 cords/5 cm. Therefore, the carcass strength was decreased by about 15% as compared with that of Example 6, but the plunger energy was increased by 3% as compared with that of the control tire. The tire performances and drum durability were considerably improved. Further, the rolling resistance and drum life were largely improved by reducing the end count as compared with those of Example 6.

Moreover, the multifilament twist dipped cords having a good air permeation were used in the outermost carcass ply, so that no air storing was caused.

Comparative Examples 11 and 12

The tire performances and drum life were equal to those of Examples 7 and 8, but the air storing was caused because the air permeation was degraded in the multifilament twist cord of the fourth carcass ply.

Example 9

In the tire, the bias carcass was comprised of first to fourth rubberized carcass plies each containing a mixture of monofilament cords and multifilament twist cords of 1260 d/2 so as to have an end count of 33.3 cords/5 cm in case of the multifilament twist cord and an end count of 7.0 cords/5 cm in case of the monofilament cord. Since the air permeation of the multifilament twist cord was 5 kg/cm$^2$/hr, there was found no tire causing the air storing.

As mentioned above, even when the ellipsoidal polyamide monofilament cords according to the invention are applied to the carcass ply of the bias tire, not only the air storing is largely reduced, but also the tire performances such as rolling resistance, steering stability, drum life and the like can be considerably improved.

**Claims**

1. A pneumatic radial tire comprising a tread portion, a pair of side portions extending from both ends of the tread portion, a pair of bead portions each located at an inward end of the side portion, and a reinforcement comprised of a carcass ply containing cords arranged in a radial direction of the tire and

17

a belt of plural belt layers superimposed about the crown of the carcass ply, said tire further comprising an innerliner rubber at its inside having a gauge of not more than 0.4 mm at the crown center portion of the tire, wherein said cords of said carcass ply are made from polyamide monofilament having an ellipsoidal shape in section, and the cord occupying ratio b/a of said ellipsoidal monofilament cord at said crown center portion is 20%<b/a<45% (where a is the distance between centers of adjoining cords when said carcass ply is cut at said crown center portion in the circumferential direction of the tire and b is the major axis of said cord in section).

2. A pneumatic radial tire as claimed in claim 1, characterized in that said innerliner rubber is obtained by compounding not less than 30 parts by weight of mica or not less than 5 parts by weight of polyethylene resin with 100 parts by weight of a rubber composition consisting of 40-100 parts by weight of butyl rubber or halogenated butyl rubber and 0-60 parts by weight of diene series rubber.

3. A pneumatic radial tire as claimed in claim 1 or 2, characterized in that said innerliner rubber has a gauge of not more than 0.2 mm at said crown center portion.

4. A pneumatic radial tire as claimed in any of claims 1 to 3, characterized in that said ellipsoidal polyamide monofilament cord has a ratio of major axis b to minor axis c within 1.5<b/c<5.

**Patentansprüche**

1. Radialluftreifen mit einem Laufflächenabschnitt, einem Paar Seitenabschnitten, die sich von beiden Enden des Laufflächenabschnittes erstrecken, einem Paar Wulstabschnitten, die sich jeweils an einem innenliegenden Ende des Seitenabschnittes befinden, und einer Verstärkung, die aus einer Karkassenlage gebildet ist, die in einer radialen Richtung des Reifens angeordnete Cordfäden und einen aus mehreren um die Krone der Karkassenlage übereinandergelegte Gürtelschichten gebildeten Gürtel enthält, wobei der Reifen des weiteren einen innenbeschichtenden Gummi an seiner Innenseite aufweist, der eine Dicke von nicht mehr als 0,4 mm an dem Kronenmittelabschnitt des Reifens hat, wobei die Cordfäden der Karkassenschicht aus Polyamid-Monofilanenten gebildet sind, die eine ellipsoide Querschnittsgestalt haben, und das Cordfäden-Besetzungsverhältnis b/a der ellipsoiden Monofilamentcordfäden an dem Kronenmittenabschnitt 20%<b/a<45% beträgt (wobei a der Abstand zwischen den Mitten aneinander angrenzender Cordfäden ist, wenn die Karkassenlage an dem Kronenmittenabschnitt in Umfangsrichtung des Reifens geschnitten ist, und b die Hauptachse der Cordfäden im Querschnitt ist).

2. Radialluftreifen nach Anspruch 1, dadurch gekennzeichnet, daß der innenliegende Gummi durch Zusammenfügen von nicht weniger als 30 Gew.-Teilen von Mica oder nicht weniger als 5 Gew.-Teilen von Polyethylenharz mit 100 Gew.-Teilen einer Gummimischung erhalten wird, die aus 40-100 Gew.-Teilen Butylgummi oder halogenisiertem Butylgummi und 0-60 Gew.-Teilen von Dien-Reihengummi besteht.

3. Radialluftreifen nach Anspruch 1 oder 2, dadurch gekennzeichnet, daß der innenbeschichtende Gummi eine Dicke von nicht mehr als 0,2 mm an dem Kronenmittenabschnitt aufweist.

4. Radialluftreifen nach einem der Ansprüche 1 bis 3, dadurch gekennzeichnet, daß der ellipsoide Polyamid-Monofilament-Cordfaden ein Verhältnis der Hauptachse b zur Nebenachse c im Bereich von 1,5<b/c<5 hat.

**Revendications**

1. Un pneumatique radial comprenant une partie de bande de roulement, une paire de parties de flanc s'étendant à partir des deux extrémités de la partie de la bande de roulement, une paire de parties de talon, agencée chacune au niveau d'une extrémité interne de la partie de flanc, ainsi qu'un renforcement composé d'une nappe de carcasse contenant des câblés agencés dans une direction radiale du pneumatique et une ceinture à plusieurs couches de ceinture superposée autour du sommet de la nappe de carcasse, ledit pneumatique comprenant en outre un caoutchouc de calandrage intérieur au niveau de sa partie intérieure, avec une épaisseur ne dépassant pas 0,4 mm au niveau de la partie centrale du sommet du pneumatique, dans lequel lesdits câblés de ladite nappe de carcasse sont composés de monofilaments de polyamide à section de forme élipsoïdale, le rapport d'occupation des câblés b/a des dits câblés en monofilaments élipsoïdaux au niveau de ladite partie centrale du sommet étant de 20% <b/a <45% (où a correspond à la distance entre les centres de câblés adjacents lorsque ladite nappe de carcasse est découpée au niveau de ladite partie centrale du sommet dans la direction circonférentielle du pneumatique et b correspond au grand axe du dit câblé en section).

2. Un pneumatique radial selon la revendication 1, caractérisé en ce que ledit caoutchouc du calandrage intérieur est produit en mélangeant au moins 30 parties en poids de mica ou au moins 5 parties en poids de résine de polyéthylène avec 100 parties en poids d'une composition de caoutchouc composée de 40 à 100 parties en poids de caoutchouc de butyl ou de caoutchouc de butyl halogéné et de 0 à 60 parties en poids de caoutchouc de la série diénique.

3. Un pneumatique radial selon les revendications 1 ou 2, caractérisé en ce que ledit caoutchouc du calandrage intérieur a une épaisseur ne dépassant pas 0,2 mm au niveau de ladite partie centrale du sommet.

4. Un pneumatique radial selon l'une quelconque des revendications 1 à 3, caractérisé en ce que ledit câblé en monofilaments de polyamide élipsoïdaux a un rapport entre le grand axe b et l'axe mineur c compris entre 1,5<b/c<5.

FIG_1

EP 0 356 159 B1